# EUROPÄISCHE PATENTANMELDUNG

(11) **EP 0 892 180 A1**
(43) Veröffentlichungstag der Anmeldung: **20.01.1999**
(21) Anmeldenummer: 98112425.8
(22) Anmeldetag: 04.07.1998
(51) Int. Cl.: F16B 11/00

(54) **Verfahren zum Herstellen einer Klebeverbindung**

(30) Priorität: 17.07.1997 DE 19730560
(71) Anmelder: DAIMLER-BENZ AKTIENGESELLSCHAFT, 70567 Stuttgart (DE)
(72) Erfinder: Fussnegger, Wolfgang, 72074 Tübingen (DE)

(57) **Zusammenfassung**

Ein Verfahren zum Herstellen einer Klebeverbindung zwischen zwei dünnwandigen Bauteilen, insbesondere Blechteilen, bei dem das erste Bauteil an einer Klebestelle mit einem Kleber versehen wird, das zweite Bauteil zumindest an der Klebestelle mit dem ersten Bauteil direkt oder indirekt zur Anlage gebracht wird und zumindest die Klebestelle einem Aushärtvorgang zum Aushärten des Klebers unterzogen wird, soll derart ausgestaltet werden, daß die Bauteile nach dem Aufbringen des Klebers weiter bearbeitet, insbesondere umgeformt werden können, ohne daß dabei eine Verschmutzung durch den Kleber auftritt. Dies wird bei einem Verfahren der eingangs genannten Art dadurch ermöglicht, daß der Kleber aus wenigstens einem, die Bauteile nicht benetzenden Festkörper - Klebkörper - besteht, wobei zumindest die Klebestelle erst nach dem Anbringen des zweiten Bauteils, insbesondere nach einer Umformung, einem Aufweichvorgang unterzogen wird, bei dem der Klebkörper aufweicht und die Bauteile an der Klebestelle benetzt, bevor er ausgehärtet ist.

## Beschreibung

Die Erfindung betrifft ein Verfahren zum Herstellen einer Klebeverbindung zwischen zwei dünnwandigen Bauteilen, insbesondere Blechteilen, mit den Schritten entsprechend dem Oberbegriff des Anspruchs 1.

Ein derartiges Verfahren wird z.B. in der Automobilindustrie für die Verbindung von Blechteilen angewendet. Beispielsweise wird auf diese Weise eine Türaußenhaut mit dem zugehörigen Türrahmen verbunden. Dazu wird ein flüssiger Klebstoff entlang eines abstehenden Außenrandes des Türrahmens, z.B. maschinell, aufgetragen. Anschließend wird die Türaußenhaut aufgesetzt, wobei diese zumindest am Außenrand direkt bzw. über den Klebstoff indirekt am Türrahmen aufliegt. Danach wird die Türaußenhaut an ihrem Randbereich umgefalzt, so daß ihr Randbereich den Außenrand des Türrahmens im Bereich der Klebstelle umfaßt. Bei diesem Umfalzvorgang werden die aufeinanderliegenden Blechteile soweit zusammengepreßt, daß der flüssige Klebstoff aus dem Überlappungsbereich der Blechteile herausgedrückt wird. Der Klebstoff kann dann Tropfen bilden, die, wenn sie abtropfen, zu Verschmutzungen der Montagestraße sowie der Werkzeuge nachfolgender Montagestationen führen. Um derartige Verschmutzungen bei den bisherigen Klebeverbindungen zu vermeiden, muß der Kleber vor einer weiteren Bearbeitung der Bauteile (z.B. Türrahmen und Türaußenhaut) ausgehärtet werden. Aus fertigungstechnischen Gründen ist das Aushärten der Klebestellen an sämtlichen mit einer derartigen Klebeverbindung versehenen Bauteilen vor deren weiteren Bearbeitung aufwendig und aus betriebswirtschaftlicher Sicht unrentabel.

Die Erfindung beschäftigt sich mit dem Problem, ein Verfahren der eingangs genannten Art derart auszugestalten, daß nach dem Aufbringen des Klebers eine Weiterbearbeitung der durch die Klebeverbindung miteinander zu verbindenden Bauteile ohne Gefahr von Verschmutzungen und ohne vorheriges Aushärten des Klebers durchführbar ist.

Dieses Problem wird erfindungsgemäß mit einem Verfahren gelöst, das die Merkmale des Anspruches 1 aufweist.

Die vorliegende Erfindung beruht dabei auf dem allgemeinen Gedanken, daß die Klebestelle statt mit einem üblicherweise verwendeten flüssigen Kleber mit einem festen Kleber versehen wird, der seine Klebewirkung erst durch einen späteren Aufweichvorgang entfaltet. Auf diese Weise wirkt der feste Kleber wie ein zusätzliches, der Klebestelle anpaßbares Bauteil, das insbesondere bei nachfolgenden Umformungsvorgängen mitverformt werden kann, ohne dabei die jeweiligen Bauteile und Werkzeuge mit Klebstoff zu verschmutzen. Außerdem zeichnet sich ein solcher Klebkörper durch ein benutzerfreundliches Handling aus, da er im allgemeinen auch von Hand positioniert werden kann ohne Rückstände an den Händen zu hinterlassen.

Als Klebkörper kann ein sogenanntes 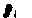 Prepreg" verwendet werden, das bei einem Aufweichvorgang, insbesondere durch eine Wärmebehandlung aufschmilzt, wobei der nunmehr flüssige Klebstoff die Bauteile im Bereich der Klebestelle benetzt und seine Klebewirkung entfaltet. In einem daran anschließenden Aushärtvorgang, der ebenfalls aus einer Wärmebehandlung bestehen kann, härtet der Klebestoff aus und verbindet im Bereich der Klebestelle die Bauteile miteinander.

Bei einer Weitergestaltung des erfindungsgemäßen Verfahrens mit den Merkmalen des Anspruches 2 und insbesondere mit den Merkmalen des Anspruches 3 kann der Klebkörper beliebige Formen aufweisen, so daß entsprechend den Anforderungen auch kompliziert geformte Klebestellen ausgebildet werden können, die auf herkömmliche Weise, durch Auftragen eines flüssigen Klebers, nicht oder nur mit hohem Aufwand erzielbar sind.

Bei der Verwendung eines Klebkörpers mit den Merkmalen des Anspruches 4 wird das Verfahren nach der Erfindung vereinfacht, da sich ein derartiger Klebekörper besonders leicht auftragen läßt.

Bei der Verwendung eines Klebkörpers mit den Merkmalen des Anspruchs 5 kann dieser zum einen leicht entlang beliebig geformter Konturen auf das Bauteil aufgetragen werden, zum anderen werden nachfolgende Umformvorgänge, z.B. Falzen, durch den Klebkörper nicht behindert.

Besonders vorteilhafte Ausgestaltungen des erfindungsgemäßen Verfahrens können die Merkmale nach einem der Ansprüche 6 bis 9 aufweisen. Hierbei wird erreicht, daß der Klebkörper selbsthaltend bzw. selbsthaftend auf eines der beiden Bauteile auftragbar ist, wobei er seine eigentliche Klebwirkung jedoch noch nicht entfaltet. Die Haft- oder Haltewirkung wird dabei durch zusätzliche Mittel erzielt, z.B. durch doppelseitiges Klebeband, durch eine Haftschicht oder durch eine spezielle Formgebung, wobei beispielsweise ein selbsthaltender Klemmkörper ausgebildet werden kann.

Bei einer besonders vorteilhaften Weiterbildung des erfindungsgemäßen Verfahrens mit den Merkmalen des Anspruches 10 ist es möglich, eine Korrosionsgefahr zwischen den miteinander zu verbindenden Bauteilen zu reduzieren. Insbesondere kann durch den bei wenigstens einem der Bauteile über die eigentliche Klebestelle hinausgehenden Auftrag des Klebkörpers und somit des Klebstoffes eine Kontaktkorrosion verhindert werden. Dies ist von besonderer Bedeutung, wenn zwei unterschiedliche Metalle miteinander verbunden werden sollen.

Die entsprechend Anspruch 11 vorgeschlagene Wärmebehandlung für den Aufweich- und/oder Aushärtvorgang wird dabei in einer üblichen Weise nach dem Ablauf etwaiger Umformvorgänge durchgeführt. Auf diese Weise wird gewährleistet, daß beim Aufschmelzen des Klebkörpers ggf. austretender Klebstoff die Werkzeuge nachfolgender Maschinen nicht verschmutzen kann, da er im Anschluß an das Aufschmelzen bereits ausgehärtet wird.

Ein besonders vorteilhaftes und rationelles Verfahren weist die Merkmale des Anspruches 12 auf, wonach insbesondere während einer Wärmebehandlung der Klebkörper zunachst aufweicht, sein Klebstoff die Bauteile im Bereich der Klebestelle benetzt und seine Klebewirkung entfaltet und in der Folge durch den kontinuierlich ablaufenden chemischen Vorgang die Bauteilen miteinander verbindend aushärtet.

Weitere Vorteile und wichtige Merkmale ergeben sich aus den Unteransprüchen und der nachfolgenden Beschreibung eines Ausführungsbeispieles. Es zeigen, jeweils schematisch,
- Fig. 1: eine Explosionsdarstellung mit Schnittansichten von zwei Bauteilen und einem Klebkörper im Bereich einer Klebestelle und
- Fig. 2: eine Schnittansicht auf eine erfindungsgemäße Klebeverbindung nach ihrer Fertigstellung.

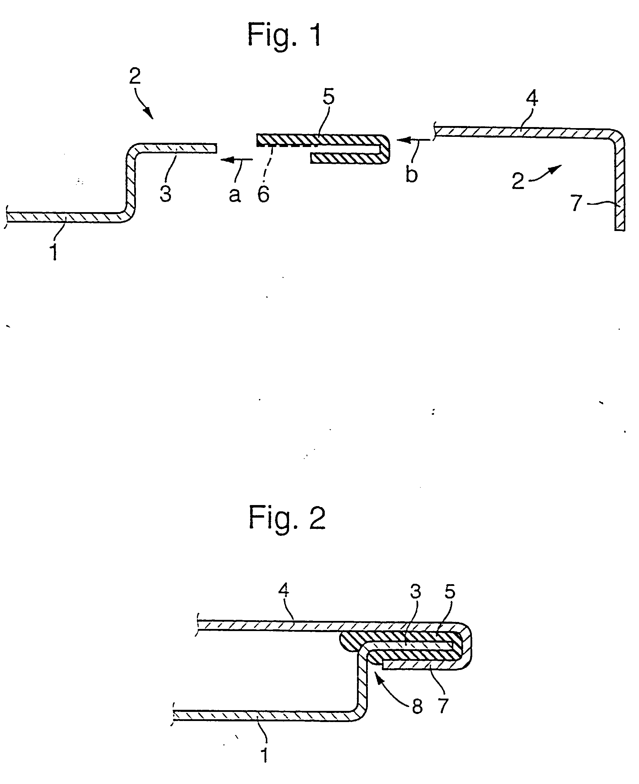

Entsprechend Fig. 1 weist ein erstes Bauteil 1 im Bereich einer Klebestelle 2 einen doppelt abgewinkelten Randbereich auf, der eine nach außen abstehende Kante 3 ausbildet. Bei diesem ersten Bauteil 1 kann es sich beispielsweise um ein Türinnenteil, insbesondere um einen Türrahmen, eines Kraftfahrzeuges handeln. An diesem Türrahmen 1 soll in Laufe der Türfertigung ein zweites Bauteil 4, insbesondere eine Türaußenhaut, mit Hilfe einer Klebeverbindung befestigt werden.

In einem ersten Verfahrensschritt wird auf die Außenkante 3 des ersten Bauteils 1 ein aus einem festen Klebstoff bestehender Klebkörper 5 aufgebracht. Der Klebkörper 5, der als Prepreg ausgebildet sein kann, ist dabei an die Form der zu schaffenden Klebeverbindung angepaßt und in diesem Fall mit einem im wesentlichen u-förmigen Profil ausgebildet. Der Klebkörper 5 wird entsprechend Pfeil a auf die Außenkante 3 des ersten Bauteils 1 aufgesteckt. Dabei ist der Klebkörper 5 vorzugsweise so ausgebildet, daß sich beim Aufstecken des Klebkörpers 5 auf das Bauteil 1 zwischen der Außenkante 3 und den beiden, die Außenkante 3 umgreifenden Schenkeln des Klebkörpers 5 eine Klemmwirkung ergibt. Somit läßt sich der Klebkörper 5 selbsthaltend am ersten Bauteil 1 bzw. an der Außenkante 3 des Türrahmens anbringen.

Zusätzlich oder alternativ zu einer solchen durch die Form des Klebkörpers 5 bewirkten Klemmverbindung kann eine Haftbeschichtung 6 am Klebkörper 5 vorgesehen sein. Eine derartige Haftbeschichtung 6 kann beispielsweise aus einem doppelseitigen Klebeband bestehen, dessen eine Seite am Klebkörper 5 haftet und dessen andere Seite für die Haftung am ersten Bauteil 1 vorgesehen ist. Auf diese Weise läßt sich der Klebkörper 5 selbsthaftend am ersten Bauteil 1 anbringen.

Entsprechend Pfeil b wird in einem weiteren Verfahrensschritt das zweite Bauteil 4, hier die Türaußenhaut, so am Türrahmen 1 angeordnet, daß sie wenigstens im Bereich der Klebstelle 2 über den Klebkörper 5 indirekt am Türrahmen 1 zur Anlage kommt. Dabei weist die Türaußenhaut 4 zur besseren Positionierung einen abgewinkelten Falzrand 7 auf, der nach dem Auflegen der Türaußenhaut 4 auf den Türrahmen 1 außen am Klebkörper 5 anliegt.

Bei einem danach ablaufenden Umfalzvorgang wird der Falzrand 7 so umgefalzt, daß er die Außenkante 3 und den Klebkörper 5 umfaßt. Dabei kann bei speziellen Ausführungsformen der Klebkörper 5 aus einem elastisch oder plastisch verformbaren Material bestehen, um den Falzvorgang nicht zu behindern oder zu beeinflussen. Vorzugsweise ist der Klebkörper 5 aus einem solchen Material hergestellt, daß er seine Klebwirkung im Rahmen solcher Umformvorgänge nicht entfaltet.

In einem nachfolgenden Aufweichvorgang wird der Klebkörper 5 aufgeweicht, bzw. aufgeschmolzen, so daß der dann flüssige Klebstoff die Bauteile 1 und 4 an der Klebestelle 2 benetzen und seine Klebwirkung entfalten kann. In einem Aushärtvorgang, der sich unmittelbar an den Aufweichvorgang anschließt oder in den der Aufweichvorgang kontinuierlich übergeht, wird der Klebstoff ausgehärtet, wodurch sich die Klebeverbindung entsprechend Fig. 2 zwischen den Bauteilen 1 und 4 ausbildet. Dabei ist die Außenkante 3 des ersten Bauteils 1 im umgefalzten Bereich des zweiten Bauteils 4 vollständig in den Klebstoff bzw. den vormaligen Klebkörper 5 eingebettet.

Im Ausführungsbeispiel sind die Außenkante 3 des ersten Bauteils 1, der Falzrand 7 des zweiten Bauteils 4 sowie der Klebkörper 5 so aufeinander abgestimmt, daß sich nach vollendeter Klebeverbindung keine Kontaktstelle zwischen den Bauteilen 1 und 4 ausbilden kann. Insbesondere füllt der Klebstoff in einem Bereich 8 einen Zwischenraum zwischen der Außenkante des Falzrandes 7 und dem ersten Bauteil 1 aus, so daß sich an dieser Stelle keine Kontaktkorrosion ausbilden kann.

## Patentansprüche

1. Verfahren zum Herstellen einer Klebeverbindung zwischen zwei dünnwandigen Bauteilen, insbesondere Blechteilen, mit folgenden Schritten:
a das erste Bauteil wird an einer Klebestelle mit einem Kleber versehen,
b das zweite Bauteil wird zumindest an der Klebestelle direkt oder indirekt mit dem ersten Bauteil zur Anlage gebracht und
c zumindest die Klebestelle wird einem Aushärtvorgang unterzogen, bei dem der Kleber ausgehärtert wird,
**dadurch gekennzeichnet,**
daß der Kleber aus wenigstens einem die Bauteile (1, 4) nicht benetzenden Festkörper - Klebkörper (5) - besteht und daß zumindest die Klebestelle (2) nach Schritt b einem Aufweichvorgang unterzogen wird, bei dem der Klebkörper (5) aufweicht und die Bauteile (1, 4) an der Klebestelle (2) benetzt bevor, er ausgehärtet ist.

2. Verfahren nach Anspruch 1,
**dadurch gekennzeichnet,**
daß nach Schritt b und vor dem Aufweichvorgang weitere Bearbeitungs-, Umformvorgänge oder dergleichen im Bereich der Klebestelle (2) an den Bauteilen (1, 4) durchgeführt werden.

3. Verfahren nach Anspruch 2,
**dadurch gekennzeichnet,**
daß der Klebkörper (5) den Umformvorgängen entsprechend vorgeformt ausgebildet ist.

4. Verfahren nach Anspruch 1 oder 2,
**dadurch gekennzeichnet,**
daß der Klebkörper (5) schnur- oder bandförmig ausgebildet ist.

5. Verfahren nach einem der vorhergehenden Ansprüche,
**dadurch gekennzeichnet,**
daß der Klebkörper (5) elastisch oder plastisch verformbar ist, ohne dabei eine benetzende Wirkung zu entfalten.

6. Verfahren nach einem der vorhergehenden Ansprüche,
**dadurch gekennzeichnet,**
daß der Klebkörper (5) selbsthaltend ausgebildet ist.

7. Verfahren nach Anspruch 6,
**dadurch gekennzeichnet,**
daß der Klebkörper (5) als Klemmteil ausgebildet ist, das selbsthaltend an dem ersten Bauteil (1) anbringbar ist.

8. Verfahren nach Anspruch 6,
**dadurch gekennzeichnet,**
daß der Klebkörper (5) mit einem beidseitig wirkenden Haftmittel (6) versehen ist.

9. Verfahren nach Anspruch 8,
**dadurch gekennzeichnet,**
daß als Haftmittel (6) ein doppelseitiges Klebeband verwendet wird.

10. Verfahren nach einem der vorhergehenden Ansprüche,
**dadurch gekennzeichnet,**
daß der Klebkörper (5) so bemessen ist, daß er beim Aufweichvorgang an wenigstens einem der Bauteile (1, 4) auch an die Klebestelle (2) angrenzende Bereiche benetzt und beim Aushärtvorgang daran aushärtet.

11. Verfahren nach einem der vorhergehenden Ansprüche,
**dadurch gekennzeichnet,**
daß der Aufweichvorgang und/oder der Aushärtvorgang aus einer Wärmebehandlung oder dergleichen besteht bzw. bestehen.

12. Verfahren nach einem der vorhergehenden Ansprüche,
**dadurch gekennzeichnet,**
daß der Aufweichvorgang und der Aushärtvorgang ineinander übergehend in einem Verfahrensschritt durchgeführt werden, wobei der Klebkörper (5) zunächst aufweicht, die Bauteile (1, 4) benetzt und anschließend daran aushärtet.
